# EUROPEAN PATENT APPLICATION

(11) **EP 4 381 947 A1**
(43) Date of publication of application: **12.06.2024**
(21) Application number: 23214466.7
(22) Date of filing: 05.12.2023
(51) Int. Cl.: A21B 1/24, A21B 1/26, A21B 1/48

(54) **CONVEYOR OVEN**

(30) Priority: 07.12.2022 US 202263386424 P; 21.11.2023 US 202318516487
(71) Applicant: The Middleby Corporation, Elgin, IL 60120 (US)
(72) Inventor: Van Camp, Richard H., Aurora, 60503 (US); Schjerven Sr., William S., Schaumburg, 60194 (US)
(74) Representative: Barker Brettell LLP

(57) **Abstract**

A conveyor oven for cooking food includes an oven chamber in which the food is cooked, a conveyor moveable to convey the food within the oven chamber, and a burner assembly operable to heat air for convection cooking of the food moving within the oven chamber on the conveyor. The burner assembly includes a heat source, a coiled air passage, and a suction box, the coiled air passage providing a circuitous heated air passage between the heat source and the suction box. A fan is configured to draw heated air from the suction box and exhaust the heated air into the oven chamber for convection cooking of the food moving through the oven chamber on the conveyor.

## Description

### BACKGROUND

Conveyor ovens are widely used for cooking pizzas and a wide variety of other food products. Examples of such ovens are shown, for example, in U.S. Pat. Nos. 5,277,105; 6,481,433; 6,655,373; 8,281,779; 8,087,407; 9,585,401; 10,362,898; and 10,842,156, each of which is assigned to The Middleby Corporation, Elgin, II., the entire contents of each of which are incorporated herein by reference insofar as they relate to conveyor support, tracking, and drive and oven controls.

Conveyor ovens typically comprise metallic housings with a heated tunnel extending through them and a conveyor running through the tunnel. Such ovens come in various sizes ranging from relatively large floor models to smaller and more compact countertop models. Regardless of the oven size, the conveyor transports food products through the heated oven tunnel at a speed which cooks the food products during their transit through the tunnel. Conveyor ovens may include a heat delivery system having one or more blowers which supply heated impingement cooking air to the tunnel through passageways leading to metal fingers opening into the oven tunnel for convection cooking. Such metal fingers are often located above and below the conveyor. The metal fingers act as airflow channels that deliver streams of hot air which impinge upon the surfaces of the food products passing through the tunnel on the conveyor for convection cooking. In modern conveyor ovens, a microprocessor-driven control panel generally enables the user to regulate heat delivery (e.g., to control the temperature within the oven, fan speed, the heat output of the heat delivery system, and the like), the speed of the conveyor, and other oven functions to properly cook food product being transported through the oven.

Conveyor ovens are generally controlled with the intent to achieve repeatable and controllable heating of the oven chamber. The conveyor generally travels at a speed calculated to properly cook food products on the conveyor belt during the time period required for the conveyor to carry the food products through the entire length of the oven tunnel. In some conveyor ovens, other food products requiring less time to cook may be placed on the conveyor at a point partially through the oven chamber so that they travel only a portion of the length of the tunnel. A pizza is an example of a food product which might require the full amount of cooking time in order to be completely cooked in the oven. A sandwich is an example of a product which might require only a portion of the full cooking time. In conventional conveyor ovens, the time required to cook a pizza, for example, from an uncooked state to a fully cooked state is in excess of 4 or 5 minutes, regardless of how much heat and air flow are supplied to the conveyor supporting the pizza.

### SUMMARY

Some embodiments of the present invention provide a conveyor oven for cooking food. The conveyor oven includes an oven chamber in which the food is cooked, a conveyor moveable to convey the food within the oven chamber, and a burner assembly operable to heat air for convection cooking of the food moving within the oven chamber on the conveyor. The burner assembly includes a heat source, a coiled air passage, and a suction box, the coiled air passage providing a circuitous heated air passage between the heat source and the suction box. A fan is configured to draw heated air from the suction box and exhaust the heated air into the oven chamber for convection cooking of the food moving through the oven chamber on the conveyor.

In some embodiments, a conveyor oven for cooking food is provided. The conveyor oven includes an oven chamber in which the food is cooked, a conveyor moveable to convey the food within the oven chamber, and a burner assembly operable to heat air for convection cooking of the food moving within the oven chamber on the conveyor. The burner assembly includes a gas burner mounted within a burner box, a first coiled air passage, a second coiled air passage separate from the first coiled air passage, and a suction box. Each of the first and second coiled air passages provide a circuitous heated air passage between the heat source and the suction box. The conveyor oven also includes a first fan and a second fan, each of the first and second fans configured to draw heated air from the suction box and exhaust the heated air into the oven chamber for convection cooking of the food moving through the oven chamber on the conveyor. The first fan is configured to deliver heated air to the oven chamber above the conveyor. The second fan is configured to deliver heated air to the oven chamber below the conveyor.

Some embodiments of the present invention provide a conveyor oven for cooking food. The conveyor oven includes an oven chamber in which the food is cooked, a conveyor moveable to convey the food within the oven chamber, and a burner assembly operable to heat air for convection cooking of the food moving within the oven chamber on the conveyor. The burner assembly includes a gas burner mounted within a burner box, a first coiled air passage, a second coiled air passage separate from the first coiled air passage, and a suction box. Each of the first and second coiled air passages providing a circuitous heated air passage between the heat source and the suction box. The conveyor oven also includes a fan configured to draw heated air from the suction box and exhaust the heated air into the oven chamber for convection cooking of the food moving through the oven chamber on the conveyor. A first heated airflow path is defined from the burner box, through the first coiled air passage, through the suction box, through the fan, and into the oven chamber. A second heated airflow path is defined from the burner box, through the second coiled air passage, through the suction box, through the fan, and into the oven chamber. The first and second heated airflow paths converge and intermix at the suction box.

### BRIEF DESCRIPTION OF THE DRAWINGS

The aspects and features of various exemplary embodiments will be more apparent from the description of those exemplary embodiments taken with reference to the accompanying drawings.
FIG. 1 is a perspective view of an exemplary embodiment of a conveyor oven.
FIG. 2 is a partial cutaway front view of the conveyor oven of FIG. 1 with some components removed to show the oven chamber.
FIG. 3 is a perspective cross-sectional view of the conveyor oven of FIG. 1.
FIG. 4A is a partial cutaway front view of the conveyor oven of FIG. 1 with still further components removed relative to FIG. 2 to illustrate fans and their outlets.
FIG. 4B is a partial cutaway front view of the conveyor oven of FIG. 1 similar to FIG. 4A, but with a baffle plate shown.
FIG. 5 is a rear perspective view of a fan of the conveyor oven of FIG. 1.
FIG. 6 is a perspective view of a burner assembly of the conveyor oven of FIG. 1.
FIG. 7 is a perspective exploded view of the burner assembly of FIG. 6.
FIG 8 is a cross-sectional side view of the burner assembly of FIG. 6.
FIG. 9 is a front perspective view into a burner box of the burner assembly of FIG. 6.
FIG. 10 is a rear perspective view into the burner box of FIG. 9.
FIG. 11 is a rear perspective view of the burner assembly of FIG. 6, illustrating the placement of couplers relative to a suction box.
FIG. 12A is a front perspective view of a coupler.
FIG. 12B is a rear perspective view of the coupler of FIG. 12A.
FIG. 13 is a rear perspective view of the suction box of FIG. 11 of the burner assembly of FIG. 6 located relative to one fan, with a second fan omitted to illustrate an outlet of the suction box more clearly.
FIG. 14 is an exploded view of the suction box of FIGS. 11 and 13.
FIG. 15 is a perspective view of a baffle plate of the conveyor oven of FIG. 1.
FIG. 16 is a perspective view of an alternative baffle plate and a diverter for use with the conveyor oven of FIG. 1.
FIG. 17 is a front perspective view of the conveyor oven of FIG. 1 with the burner assembly of FIG. 6 removed and an alternative electric burner assembly also shown removed.
FIG. 18 is a rear perspective view of the conveyor oven of FIG. 1 with the burner assembly of FIG. 6 removed and the alternative electric burner assembly also shown removed.

### DETAILED DESCRIPTION

Before any exemplary embodiments of the present invention are explained in detail, it is to be understood that the invention is not limited in its application to the details of construction and the arrangement of exemplary components set forth in the following description or illustrated in the following drawings. Use of relative terms such as "upward," "downward," "up," "down," "top," and "bottom," as well as derivatives of such terms (e.g., "downwardly" and "upwardly") should be construed to refer to an exemplary orientation as then described or as shown in the drawing under discussion. These relative terms are for convenience of description and do not require that the apparatus be constructed or operated in a particular orientation. The invention is capable of other embodiments and of being practiced or of being carried out in various ways.

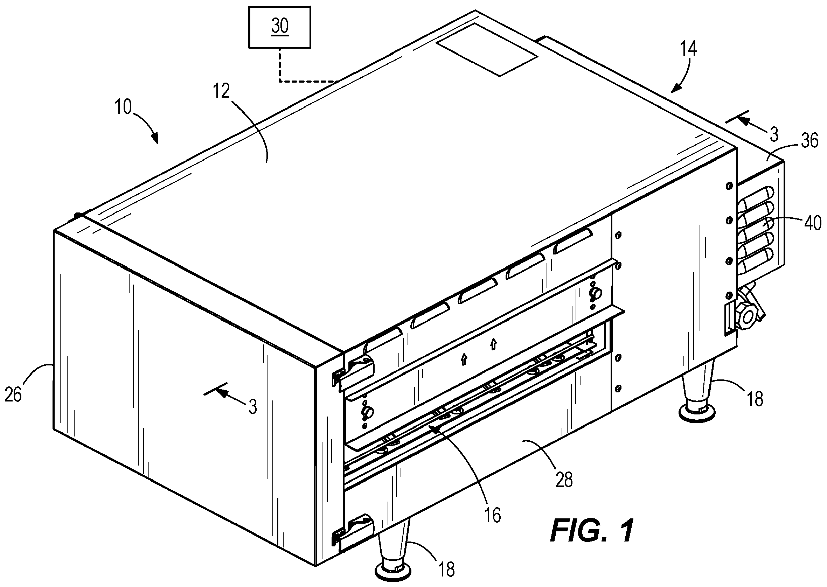

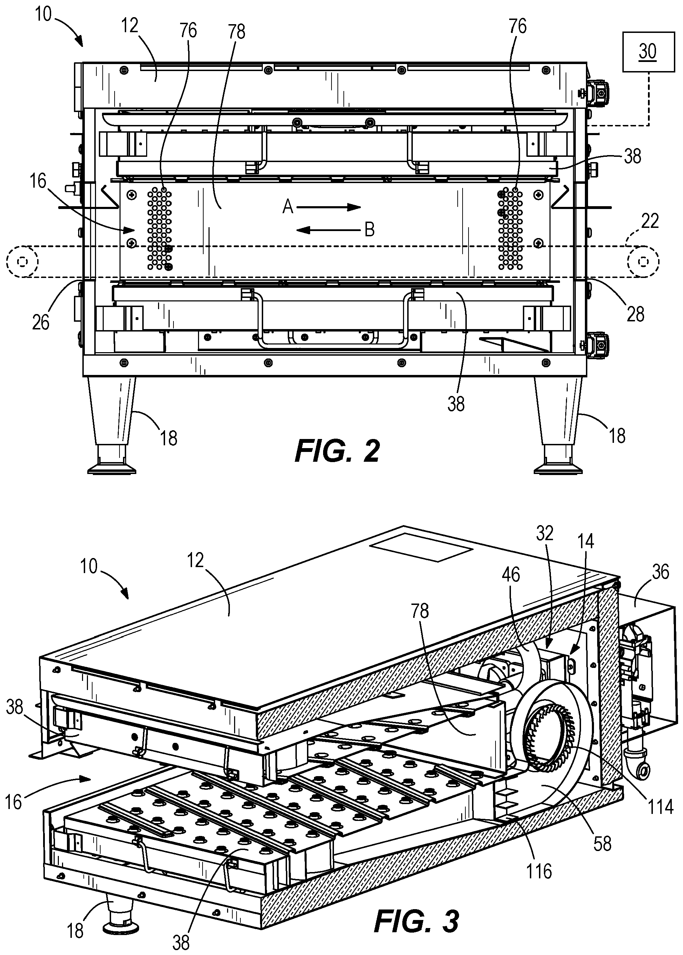

FIGS. 1-3 show a conveyor oven 10 having an oven housing 12, a burner assembly 14 mounted at least partially within the oven housing 12 and, as shown, extending outward from a rear side of the oven housing. One or more leg assemblies 18 extend from the bottom of the housing 12. With reference to FIG. 2, a conveyor 22 runs through a cooking chamber or oven chamber 16 of the oven 10. The oven chamber 16 is formed as a heated tunnel 24. A raw food product can be placed on the conveyor 22 and moved through the heated tunnel forming the cooking chamber 16 to exit as a cooked food product.

With continued reference to FIG. 2, the conveyor 22 has a width generally corresponding to the width of the oven chamber 16, and is designed to travel, from the perspective of FIG. 2, in a first direction A, from left oven end 26 toward right oven end 28, or alternatively in the opposite direction B, from right oven end 28 toward left oven end 26. Thus, oven ends 26 and 28 may serve respectively as the inlet and outlet of an oven with a rightwardly moving conveyor 22 or as the outlet and inlet of an oven with a leftwardly moving conveyor 22.

The support, tracking, and drive of conveyor 22 are achieved using conventional techniques as would be understood by one of ordinary skill in the art. The speed at which the conveyor 22 moves can be coordinated with the temperature in the oven chamber 16 so that the emerging food product is properly cooked.

Often, only one conveyor 22 is used, as shown. Certain specialized applications, however, may make two or more conveyors a preferable design. For example, a first conveyor may begin at left oven end 26 and travel at one speed to the center or other location of the oven 10, while a second conveyor beginning at such a central location and ending at the right oven end 28 may travel at a different speed. Alternatively, conveyors that are split longitudinally may be used, so that one conveyor carries a product in direction A, while the other conveyor carries a product in direction B, or so that two side-by-side conveyors carry product in parallel paths and in the same direction (A or B) through the oven 10. This enables one product to travel on the conveyor 22 at one speed to cook one kind of product and the other conveyor to travel on the other conveyor at a different speed to cook another kind of product. In addition, three or more side-by-side conveyors can carry product in parallel paths through the oven 10.

The conveyor oven includes a control assembly 30 (shown schematically in FIGS. 1, 2) for the oven 10. The control assembly may be incorporated into the oven housing 12, into a separate housing attached to the oven housing 12, or in a remote housing spaced apart from the oven housing 12 and configured to communicate with and control aspects of the conveyor oven via wired or wireless signals. A microprocessor-based controller can be implemented as the control assembly 30, and can include a central processing unit ("CPU"), one or more displays, and a control interface. The CPU can control a plurality of devices including one or more burners (including one or more fan switches, ignition switches, fuel valves, and flame sensing elements), one or more fans 56, 58 (e.g., circulating blowers), and one or more conveyors 22. The CPU may also receive input from a plurality of sensors including one or more temperature sensors and one or more photo sensors. The control assembly 30 can include a controller which may be programmed to control and monitor the cooking process by pressing appropriate set-up and display buttons while viewing an alphanumeric display, which will display process variables and setpoints including oven temperature, hot air blower speed, etc. See e.g., U.S. Patent No. 10,842,156, assigned to The Middleby Corporation, Elgin, I1, as it relates to exemplary oven control systems, the entire contents of which are incorporated herein by reference.

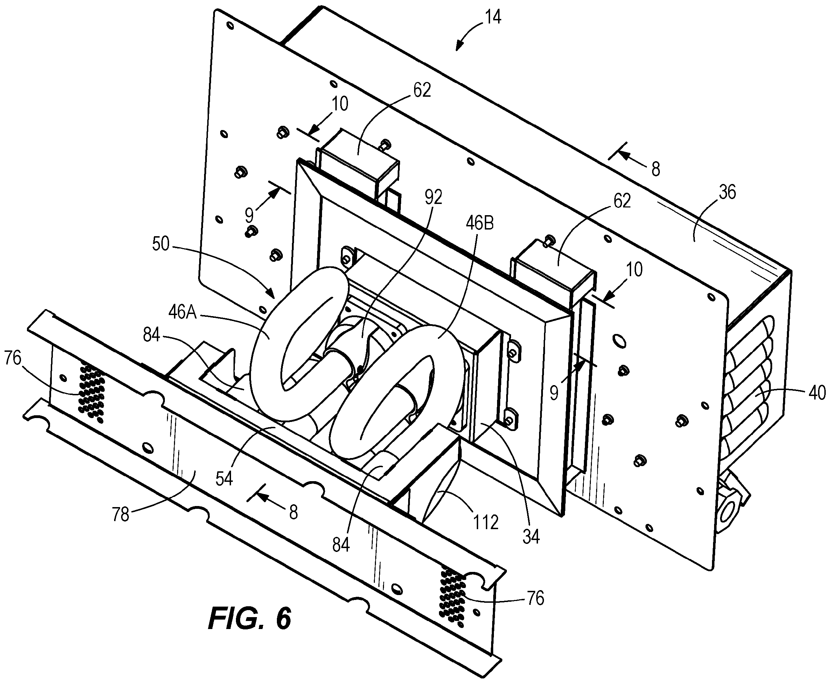

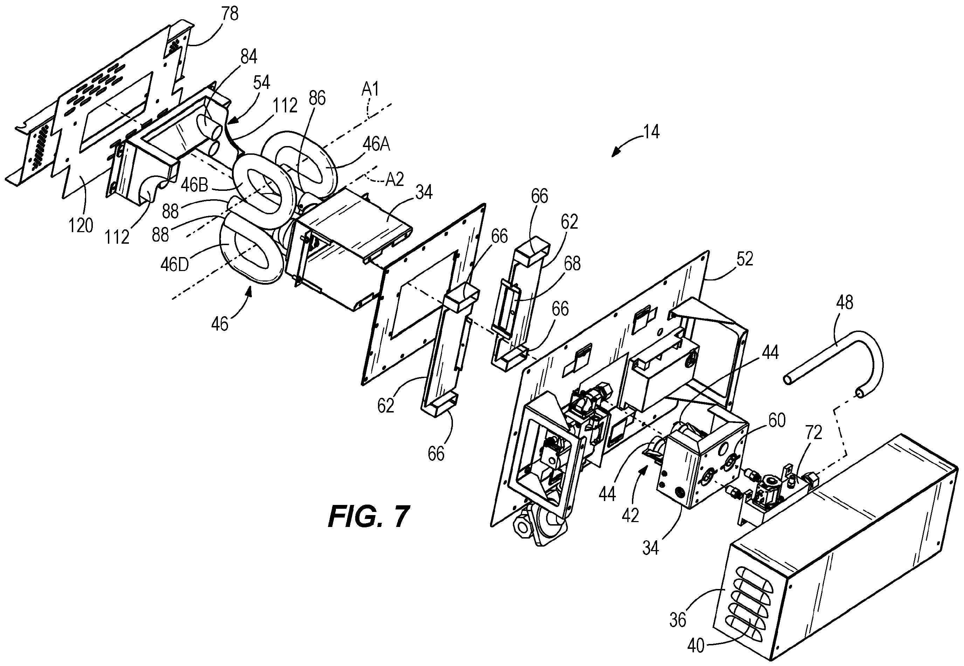

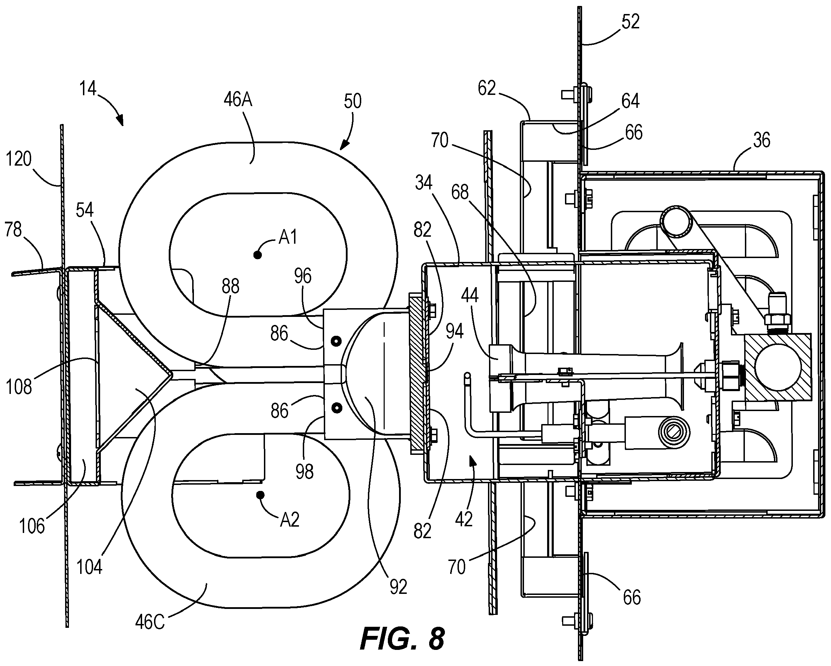

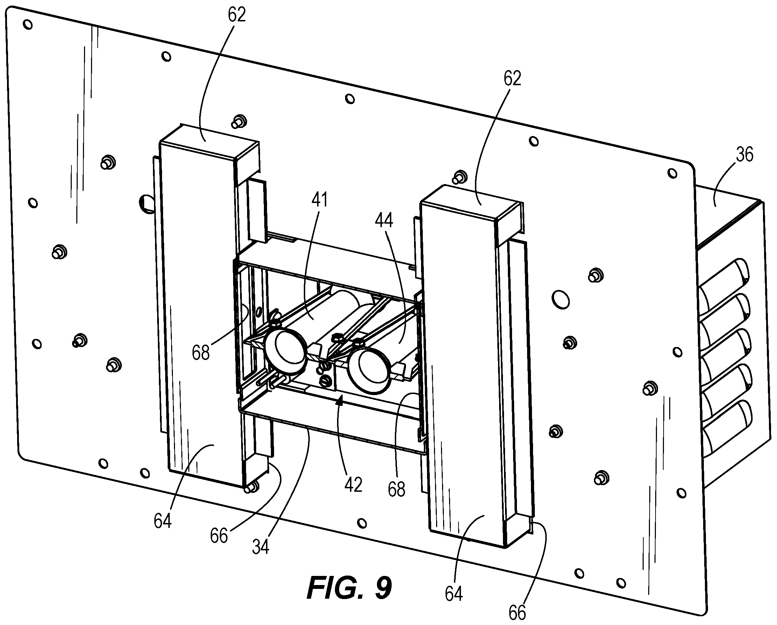

FIGS. 3-15 show exemplary components involved with the heat delivery system for the oven 10, which is configured to provide convection heating to the tunnel 24 and food products traveling therethrough. The illustrated heat delivery system includes a burner assembly 14 positioned within a heat exchange chamber 32. As shown in FIG. 3, the heat exchange chamber 32 is formed at least partially within the oven housing 12 and is further defined in part by an auxiliary housing 36 coupled to the exterior of the oven housing 12. As shown in FIGS. 7 and 8, the burner box 34 may be formed as a multi-component housing, with a first portion mounted within the oven housing 12 and a second portion mounted within auxiliary housing 36 external to the oven housing 12. The auxiliary housing 36 includes air vents 40 that provide airflow into and out of the auxiliary housing 36 (FIGS. 6-7). The burner assembly 14 is separate from and located rearward of the cooking chamber or oven chamber 16 through which the food passes on the conveyor 22. The burner assembly 14 functions to provide an airflow via fans 56, 58 and impingement fingers 38 of heated impingement air from the heat exchange chamber 32 to the oven chamber 16 to heat the food on the conveyor 22 for convection cooking. The burner assembly 14 communicates with the oven chamber 16 via metal impingement fingers 38 (FIGS. 2-3) located above and below the conveyor 22 to direct the heated impingement airflow from the burner assembly 14 into the oven chamber 16.

The burner assembly 14 that generates and directs heat to the oven chamber 16 includes a heat source 42, such as gas burners 44, coiled air passages 46 (individually numbered 46A-46D) that function as a heat exchanger 50, a suction box 54 that receives heated air from the coiled air passages 46, and first and second fans 56, 58 that draw the heated air from the suction box 54 and direct the heated air to the oven chamber 16 via the fingers 38. See e.g., FIGS. 6-9.

The heat source 42 may include a gas burner 44, or as illustrated in the exemplary embodiment, includes two gas burners 44 positioned adjacent one another within the burner box 34. The gas burners 44 are provided with a gas inlet, an ignition source, and a regulator, among other components that produce combustion of the gas. Further details relating to the components associated with exemplary gas burners and their controls can be found, for example, in U.S. Patent Nos. 10,842,156 and 11,369,118, both assigned to The Middleby Corporation, Elgin, Il., the entire contents of each of which are incorporated herein by reference. At least some of the components associated with controlling the gas flow to the gas burners 42 are mounted to a rear wall 52 of the oven housing 12. The burner box 34 is formed as a housing that surrounds the gas burners 44 within which the gas (provided via a gas line 48 to the gas burners 44) is ignited to generate a gas-powered flame. The heat source 42 therefore operates to heat air within the burner box 34.

The burner box 34 includes a plurality of air inlets 60, 62 for providing air to the burner box 34 to be heated by the heat source 42. The air introduced to the burner box 34 by the air inlets 60, 62 is at a lower ambient temperature than the air introduced into the oven chamber 16 as heated by the burner assembly 14. Primary air inlets 60 (FIG. 7) are provided around the gas injectors 74 (FIG. 8) of the gas manifold 72, formed in the rear side of the burner box 34. The primary air inlets 60 provide fresh, ambient air (e.g., sourced through air vents 40) around the injectors 74 and into a venturi at the entrance of each burner 44, where gas and air are mixed. The air and gas mixture travels to the burner face at the front portion of the burner 44. The air and gas mixture is then ignited by an ignition source within the burner box 34. As shown, with two burners 44, the burner box 34 includes two primary inlets 60, one primary inlet 60 associated with each of the burners 44. In the exemplary embodiment, the openings 60 are generally circular, such that when the gas injector 74 is positioned within the primary inlet 60, the space through which the air enters the burner box 34 is around the perimeter of the injector 74, though the openings may be otherwise sized or shaped in other embodiments.

Auxiliary air inlets 62 are provided on a rear wall of the oven housing 12 and provide for the flow of ambient air from outside of the conveyer oven 10 into the burner box 34 at a location spaced apart from the primary air inlets 60 (FIGS. 6-10). The auxiliary air inlets 62 provide additional air (beyond that provided by the primary air inlets 60) to the burner flames and aid in completion of the combustion process. Each auxiliary air inlet 62 includes an air duct 64 that defines a passageway 70 that extends between upper and lower air intake openings 66 for drawing in air from outside of the conveyor oven 10. Ambient air drawn into passageway 70 though inlets 62 is exhausted into burner box 34 through an air outlet opening 68 positioned between the upper and lower air intake openings 66.

The air from outlet 68 is thus exhausted into the burner box 34 at a location distanced from the location where the air from the primary air inlets 60 has already mixed with gas from the injectors 74. In more detail, the auxiliary air inlets 62 exhaust air into the burner box 34 at a location adjacent the front face of the burners 44. whereas the primary air inlets 60 are located adjacent the opposite end of the burners 44 and at the rear side of the burner box 34. The air from the auxiliary air inlets 62 serves to interrupt the linear flow of the air-gas mixture from the burners 44, generating an improved combustion mix and decreasing the velocity of the flame off the face of the burner 44. In some embodiments, one or more of the intake openings 66 can be blocked to decrease total airflow through the ducts 64. As shown, the burner assembly 14 includes two auxiliary air inlets 62, one positioned on either side of the burner box 34. With such an arrangement, ambient air is drawn from multiple discrete locations outside of the oven 10 for supply to the burner box 34. Positioning the burner box 34 partially within the oven housing 12 serves to decrease the overall depth and provide a relatively compact footprint of the oven housing 12

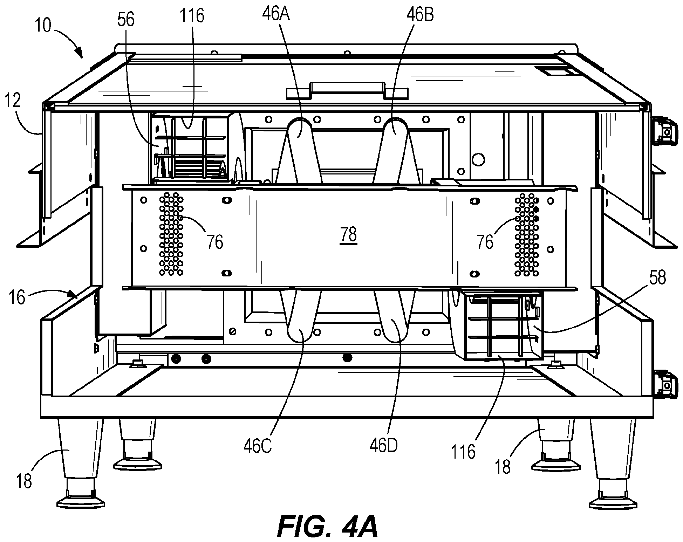

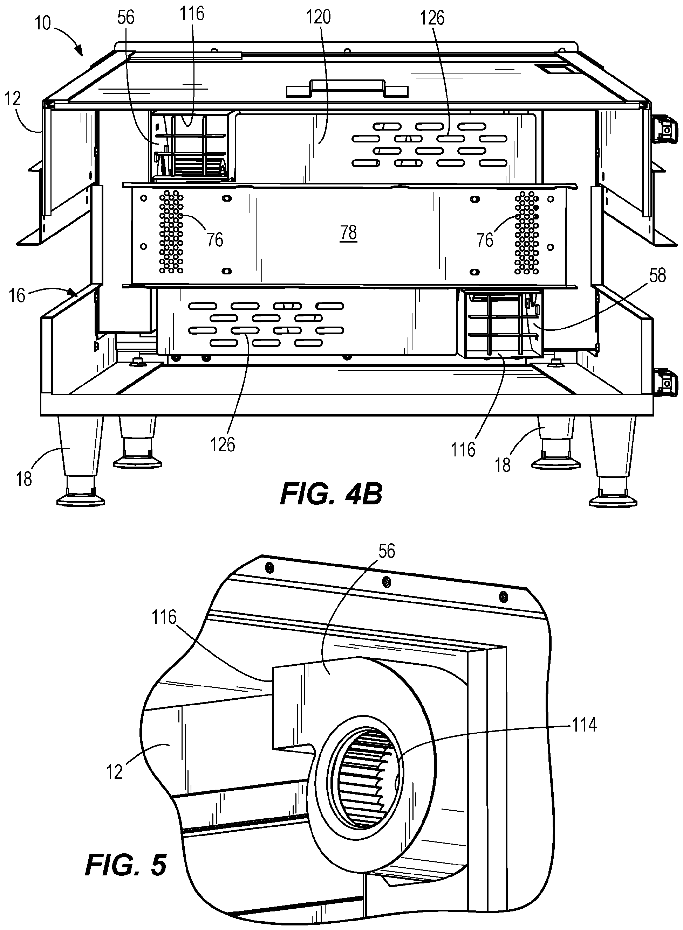

Air is recirculated from the oven chamber 16, returning to the heat exchange chamber 32, via air return openings 76 (FIGS. 4, 6, 13-14) provided in the rear wall 78 of the oven chamber 16 that separates the oven chamber 16 from the heat exchange chamber 32. Though not shown, in some embodiments, further air inlets may be provided within the burner box 34 to draw air from within the heat exchange chamber 32 into the burner box 34.

Heated air from the burner box 34 is drawn away from the burner box 34 through the coiled air passages 46. The coiled air passages 46 (which include first passage 46A, second passage 46B, third passage 46C, and fourth passage 46D) are each formed as a hollow tube to provide an air flow path from the burner box 34 to the suction box 54. The coiled air passages 46A-46D are coupled to and extend between an outlet 82 of the burner box 34 and an inlet 84 of the suction box 54 to provide fluid communication between the burner box 34 and suction box 54. As shown, each of the coiled air passages 46 defines a circuitous, non-linear air flow path from the burner box 34 to the suction box 54. The non-linear air flow path defined by each coiled air passage 46 is more than twice as long (e.g., greater than two times as long, two to three times as long, two to five times as long, greater than three times as long) as an otherwise straight-line path connecting the outlet 82 of the burner box 34 with the inlet 84 of the suction box 54.

As shown, each coiled air passage 46 completes a full rotation between the an inlet 86 at the outlet of the burner box 34 and an outlet 88 at the inlet 84 of the suction box 54. This coiled arrangement of the air passages 46 serves to function as a heat exchanger between air passages 46 and the surrounding air in the heat exchange chamber 32. As described above, the air within the heat exchange chamber 32 includes the air recirculated from the oven chamber 16 through openings 76 within the rear wall 78 and through spaces around the rear wall 78. The air from the oven chamber 16 is reheated in heat exchange chamber 32 by scrubbing heat from the exterior of the coiled air passages 46 and then returned to cooking chamber 16 by being drawn into the inlets 114 of fans 56, 58, which are open to the heat exchange chamber 32. Fans 56, 58 exhaust the heated air from heat exchange chamber 32 into cooking chamber 16 via the impingement air fingers 38. Further heat transfer may also occur between the various coiled air passages 46 to homogenize the temperatures of the airflows within the various passages 46.

A baffle plate 120 is illustrated in FIGS. 4B, 7, 8, and 15. The baffle plate 120 directs the airflow that passes through, above, and below the rear wall 78 from the oven chamber 16 into the heat exchange chamber 32 for reheating as discussed above. More specifically, the baffle plate 120 is a thin-walled plate (e.g., similar thickness as the rear wall 78) that directs the airflow from the oven chamber 16 generally away from the fan inlets 114 and towards the coiled air passages 46 to improve the heat transfer of the heat exchanger and decrease the amount of air from the oven chamber 16 that is drawn into the fan inlets 114 without first passing around the coiled air passages 46.

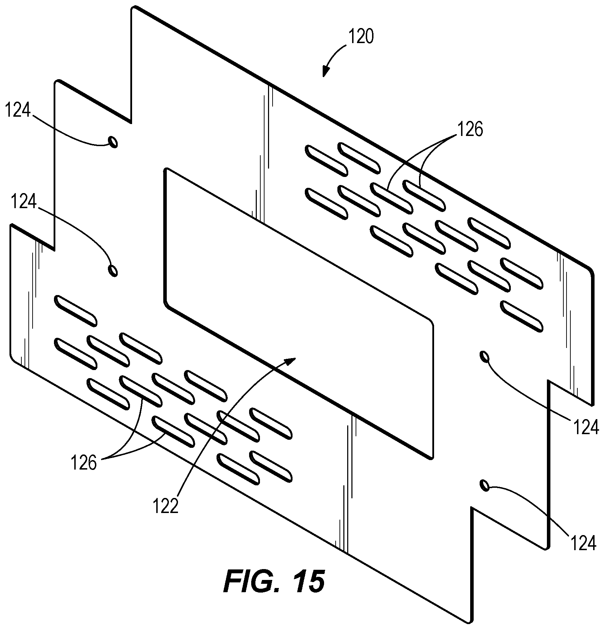

The baffle plate 120 includes a large central opening 122 sized to slide over and around the suction box 54 to surround the entirety of the suction box 54 (FIG. 7.) The baffle plate 120 further includes mounting apertures 124 for coupling the baffle plate 120 to the oven (e.g., to the rear wall 78) (FIG. 15). In some embodiments, the mounting apertures 124 are aligned with the apertures for mounting the suction box 54 to the rear wall such that the same fasteners are used to mount the suction box 56 and the baffle plate 120 to the rear wall.

The baffle plate further includes air passages 126 (shown as oblong apertures, though the apertures can otherwise be embodied as slots or other openings) that permit airflow from the oven chamber 16 to the heat exchange chamber 32. As shown, the air passages 126 of the baffle plate 120 are offset (to the left and to the right as shown from the perspective in FIG. 4B) such that they are spaced apart from the respective fans 56, 58. The air passages 126 on the top are positioned to the right while the upper fan 56 is positioned to the left and the air passages 126 on the bottom are positioned to the left while the lower fan 58 is positioned to the right. With this arrangement, air passing through the air passages 126 into the heat exchange chamber 32 will first pass around the coiled air passages 46, exchanging heat with the passages prior to entering an inlet 114 of one of the fans 56, 58. The baffle plate 120 is omitted from some figures for purposes of clarity to illustrate other oven components and their locations in the oven.

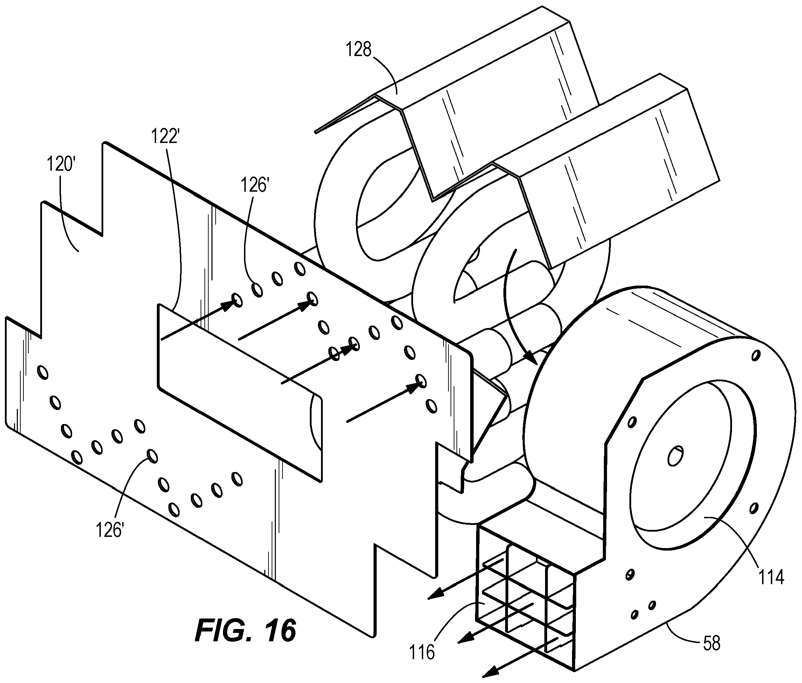

FIG. 16 illustrates a baffle plate 120' according to another embodiment. The baffle plate 120' includes openings 122', 126' similar to openings 122, 126 and may also include mounting apertures similar to mounting apertures 124. The baffle plate 120' differs from the baffle plate 120 shown in FIG. 15 in that the arrangement of the air passages 126' corresponds to the design of a diverter 128. A diverter having a design corresponding to the openings 126 in the baffle plate 120 of FIG. 15 may likewise be used in conjunction with the baffle plate 120.

The diverter 128 is of a thin-walled construction (e.g., bent sheet metal) and positioned within the heat exchange chamber 32 such that it extends at least partially around the upper coiled air passages 46. As shown, the diverter 128 is generally M-shaped, such that the two peaks of the "M" shape extend around the tops of the two upper coiled air passages 46. The air passages 126' are arranged in an "M" shape that substantially corresponds to and is smaller than the "M" shape of the diverter 128 such that the air passages 126' fluidly connect the oven chamber 16 to an interior space formed within diverter 128. In FIG. 16, the upper diverter 128 is shown spaced apart from the baffle plate 120' for clarity. In the assembled oven 10 however, the upper diverter 128 will be positioned directly adjacent to (e.g., abutting) an upper portion of the baffle plate 120' behind the air passages 126'. Upper diverter 128 will thus direct the airflow passing from the oven chamber 16 and through air passages 126' of baffle plate 120' across the coiled air passages 46 to facilitate greater heat exchange between the coiled air passages and the air from the oven chamber 16 before the reheated air is drawn into the inlets 114 of the fans 56, 58.

A second lower diverter (not shown), identical to the upper diverter 128 shown in FIG. 16, is rotated 180 degrees relative to the upper diverter 128 as an inverted "M" and positioned opposite (i.e., behind) the two lower pairs of openings 126' that are each arranged in an inverted "M" shape. The lower inverted M-shaped diverter 128 extends at least partially around the lower coiled air passages 46 such that the two peaks of the inverted "M" shape extend around and surrounds the undersides of the two lower coiled air passages 46.

The coiled air passages 46 at least partially define a burn zone where combustion is completed. The length of the coiled air passages 46 (as opposed to a straight passage) results in a burn zone that terminates within the coiled air passages 46, preventing the introduction of flames into the fans 56, 58, which could otherwise lead to overheating of the fan and/or motor shaft/bearings. The coiled air passages 46 thus provide a shielded environment for the flames, which increases the reliability and predictability of the heated air flow, preventing disruption of the completion of the combustion process and the turbulent introduction of heat to the oven's hot air circulating system. Flames and flue gases from the burner tubes 44 are collected and retained within the coiled passages 46 via the suction created by fans 56, 58, as described below, and thereby prevent turbulent air-flame interaction within the heating chamber 32. Containment of the flue gases and burner flames within the coiled air passages 46, along with the heat exchange provided by the coiled arrangement of the air passages 46 and the recirculation of air from the oven chamber 16, creates a heating environment without hotspots and reduces potential damage within the heat exchange chamber 32 if the burner flames and flue gases were not entrapped and contained within coiled air passages 46. This is particularly significant in a compact space as found within heat exchange chamber 32.

Referring to FIGS. 4 and 6-8, the coiled air passages 46 are arranged in a rectangular array with two coiled air passages 46A, 46B being located above the other two coiled air passages 46C, 46D. From the perspective of FIG. 6, two of the coiled air passages 46A, 46C are located to a first (e.g., left) side of the burner box 34 with the other two coiled air passages 46B, 46D located to a second (e.g., right) side of burner box 34. Viewed from the right side of the oven 10, as shown in the cross-section of FIG. 8, the first coiled air passage 46A coils upward in a clockwise direction about an axis A1 from the inlet 86 (located at the outlet 82 of the burner box 34) to the outlet 88 (located at the inlet 84 of the suction box 54). Viewed from the same angle, the second coiled air passage 46B (i.e., the other upper coiled air passage not shown in FIG. 8) similarly coils upward in a clockwise direction about the same axis A1. The two lower coiled air passages 46C, 46D, when viewed from the same angle, coil downwardly in a counterclockwise direction about an axis A2 from their respective inlet 86 to their respective outlet 88. The axes A1, A2 extend generally parallel to one another.

As shown in FIGS. 6-7, each coiled air passage 46 coils outward (i.e., away from the adjacent coiled air passage 46 in the left-right direction) such that the distance between the outlets 88 of adjacent coiled air passages 46 (in the left-right direction) is greater than the distance between adjacent inlets 86 (in the left-right direction).

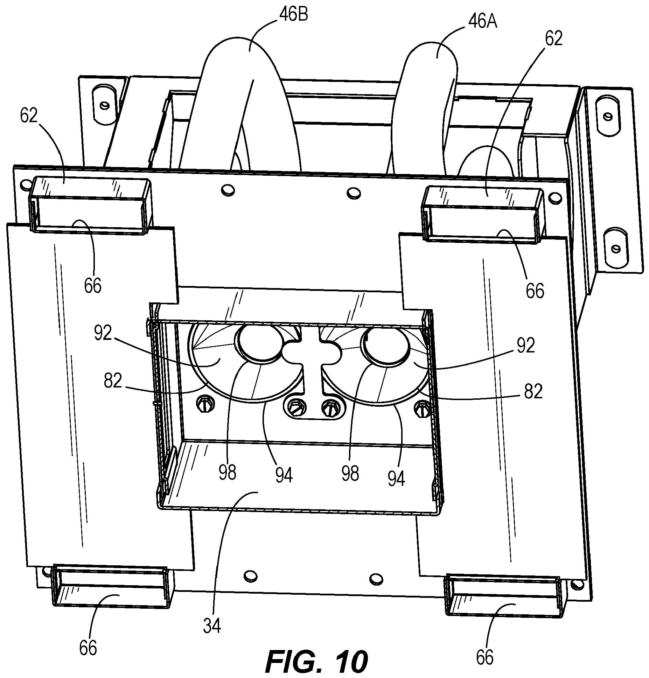

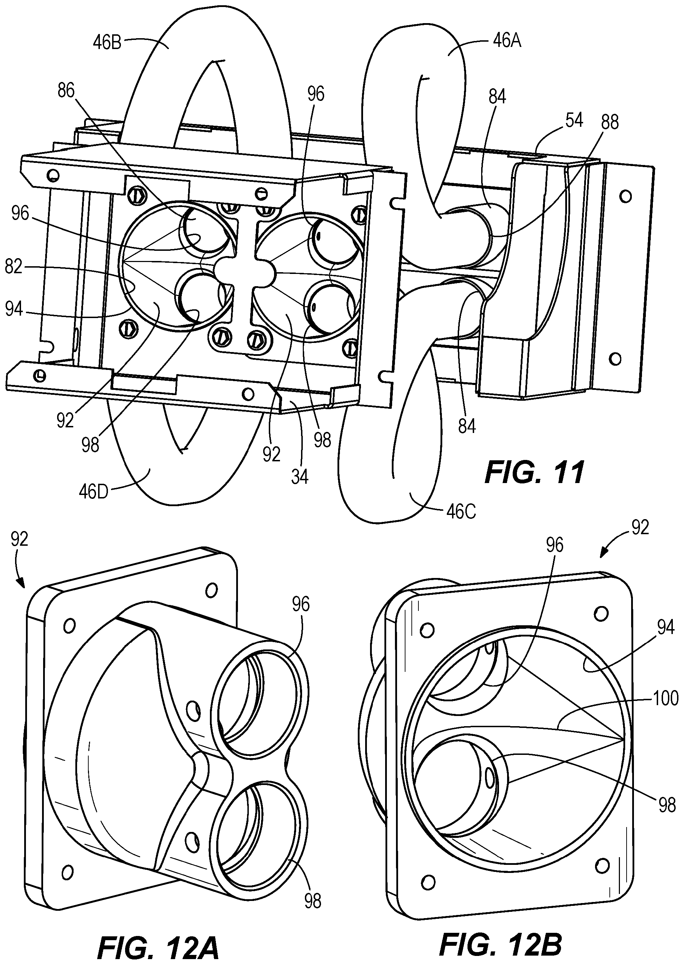

With reference to FIGS. 10, 11, 12A, and 12B, the coiled air passages 46 are connected to the burner box 34 via couplers 92. As such, each of the inlets 86 of the coiled air passages 46 is coupled to the burner box 34 via one of the couplers 92. As shown, each coupler 92 includes an inlet 94 coupled to the outlet 82 of the burner box 34, a first upper outlet 96, and a second lower outlet 98 (FIGS. 11, 12A, 1B). Each of the first and second outlets is coupled to the inlet 86 of one of the coiled air passages 46. Specifically, each coupler 92 attaches to a vertical pair of the coiled air passages 46 (i.e., the first and third coiled air passages 46A, 46C paired together and the second and fourth coiled air passages 46B, 46D paired together) via outlets 96, 98. See FIG. 11. The coupler 92 thus forms an abbreviated passage between the inlet 94 and each of the two outlets 96, 98. As shown in FIG. 12A, each outlet 96, 98 includes an opening 102 (such as a threaded opening) for receiving a fastener (not shown), such as a set screw, for securing one end (i.e., the inlets 86) of the respective coiled air passage 46 within the respective outlet 96, 98. The internal passage is bisected by a diverter 100 (FIG. 12B) that directs the airflow from the inlet 94 towards the two distinct outlets 96, 98. The diverter 100 includes a pair of walls angled relative to one another and transverse to the direction of airflow through the inlet 94 to funnel the heated airflow towards the outlets 96, 98.

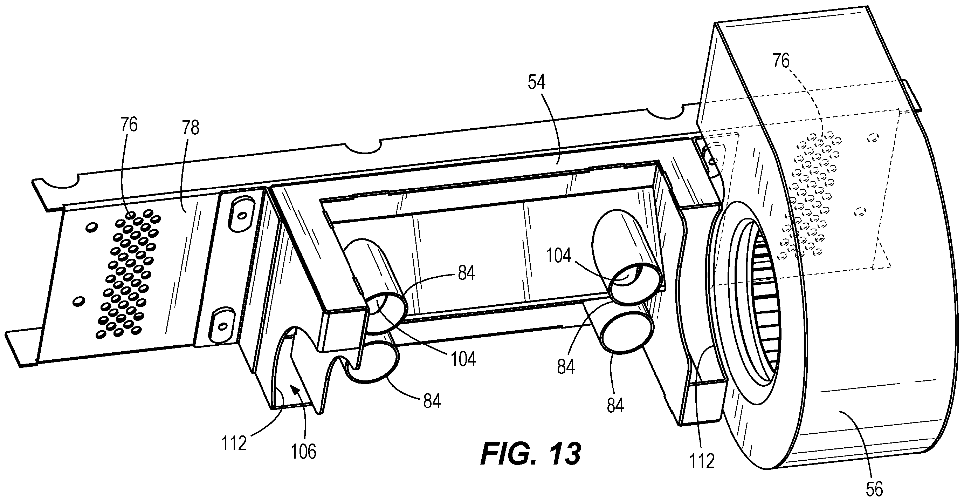

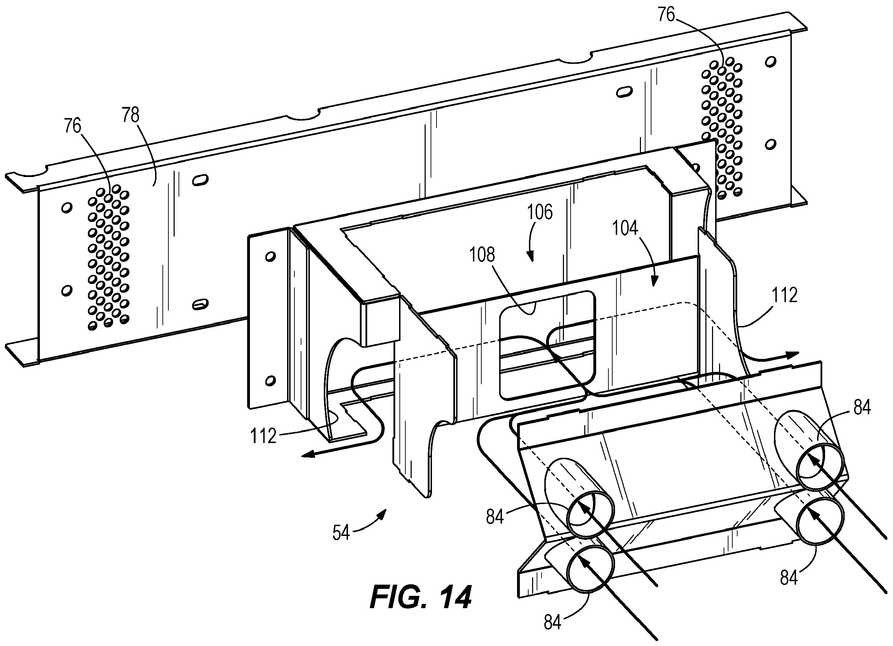

With reference to FIGS. 13-14, heated air from the coiled air passages 46 is drawn into the suction box 54 via coiled air passages 46 by the first and second fans 56, 58 as shown in FIGS. 3, 5. The inlets 84 of the suction box 56 correspond to the outlets 88 of the respective coiled air passages 46. As such, the suction box 56, as shown, includes four inlets 84. While the inlets 86 of the coiled air passages 46 are fastened to one of the couplers 92, the outlets 88 of the coiled air passages 46 are slip fit within (e.g., slip fit into, slip fit around) the inlets 84 of the suction box such that the coiled air passages 46 are capable of axial movement along a length of the inlet 84 to accommodate thermal expansion. The suction box 56 is positioned in a central location from which the heated air from all of the coiled air passages 46 is intermixed. The suction box 56 includes a first chamber 104 into which the heated air enters via the inlets 84. See FIGS. 8, 14. The suction box 56 further includes a second chamber 106 in fluid communication with the first chamber 104 via a centrally positioned aperture 108 between the two chambers. Central aperture 108 consolidates the airflow from the four coiled air passages 46 and provides a balanced draw on the burner tubes 44.

Outlets 112 of the suction box 54 (positioned adjacent the inlets 114 of the fans 56, 58) are located at opposite ends of the second chamber 106 with aperture 108 located centrally therebetween. See FIGS. 3, 5-7, 13-14. As such, air from the coiled air passages 46 is drawn through the inlets 84 of suction box 56, into the first chamber 104, through the central aperture 108, and to the fan inlets 114 via the outlets 112 of the suction box. The outlets 112 are contoured to conform and mate with the intakes of the fans 54, 56. FIGS. 3, 5-7, 13.

As shown in FIGS. 11 and 13, the inlets 84 of the suction box 54 are formed in a rectangular array, with the inlets 84 grouped as pairs of upper and lower inlets and as pairs of left and right inlets. From the perspective of FIG. 13, the left inlets 84 are associated with the left-side coiled air passages 46A, 46C and the right inlets 84 are associated with the right-side coiled air passages 46B, 46D. The aperture 108 between the first and second chambers 104, 106 is centrally located between the left inlets 84 and the right inlets 84 (in the left-right direction) such that the heated air drawn from the coiled air passages 46 travels inwards (in the directions away from the left/right outermost extents of the oven 10) and converges at the aperture 108, where the heated airflow then splits, traveling outwards (in opposite directions towards the left/right outermost extents of the oven 10) towards the opposed outlets 112 and the fans 56, 58.

With reference to FIG. 3-5, each fan 56, 58 includes a central inlet 114 through which the heated air is drawn. The central inlet 114 of each fan is aligned with a respective outlet 112 of the suction box 54 to draw the heated air from the suction box 54. Each fan 56, 58 then exhausts the air through an outlet 116 and into a respective one of the upper and lower fingers 38 for providing the heated impingement air into the oven chamber 16 for convection cooking. As shown, a first fan 56 directs the airflow to upper fingers 38 positioned above the conveyor 22 and the second fan 58 directs the airflow to lower fingers 38 positioned below the conveyor 22. Each fan 56, 58 is driven by a motor (not shown) and is controlled via the control assembly 30 to operate at a desired speed. In some embodiments, the desired speed of the first fan 56 may be different than the desired speed of the second fan 58 such that the two fans are operated independently from one another at different speeds.

In operation, the fans 56, 58 are operated by motors in response to a signal from the controller 30. The signal may be in response to a user input to a control panel of the conveyor oven and/or may be tied to movement of the conveyor 22. Control of the fans 56, 58 can be based at least in part upon one or more temperatures sensed within the oven 10 (such as a temperature sensor positioned within each fan housing downstream of the fan impeller, temperature sensors located in or adjacent the oven chamber 16 to detect the temperature of air at different locations in the oven chamber 16, temperature sensors (not shown) mounted near the left end 26 of the oven tunnel, the right end 28 of the oven tunnel, or at other points therebetween, or temperature sensors positioned at other points along the airflow path), one or more detected or calculated positions of food products within, entering, or exiting the oven 10, and/or the passage of one or more predetermined periods of time. In that regard, one or more position sensors (not shown) can be located to detect the position of food product on the conveyor 22 in place of or in addition to any of the above-mentioned temperature sensors and can thereby control one or more operations of the oven 10 as a result of such position detection. Further details relating to the components associated with exemplary oven control systems can be found, for example, in U.S. Patent Nos. 10,842,156 and 11,369,118, both assigned to The Middleby Corporation, Elgin, II., the entire contents of each of which are incorporated herein by reference.

In summation, ambient air from outside the oven 10 is drawn into the burner box 34 through air inlets 60, 62. The ambient air is heated via the gas burners 44, which function as a heat source 42 within the burner box 34. Operation of the fans 56, 58 (with their placement relative to the burner assembly 14) generates airflow drawn through the burner assembly 14 via coiled air passages 46 and through the inlets 114 of the fans 56, 58. The heated air is drawn out of the burner box 34 through couplers 92, which divert the airflow to the coiled air passages 46. The heated airflow is then drawn through each of the coiled air passages 46 along a non-linear, circuitous path providing sufficient time for combustion to complete within the coiled air passage 46 and heating the surrounding air within heat exchange chamber 32, which can be circulated into the cooking chamber 16.

Heated air is drawn from each of the coiled air passages 46 into the first chamber 104 of the suction box 54. The multiple airflows from the different coiled air passages 46 converge in the first chamber 104, pass through the central aperture 108, and into the second chamber 106 of the suction box 54. Within the second chamber 106, the airflow diverges once again, drawn towards the inlets of the two fans 56, 58. The heated air drawn through the fans 56, 58 is then exhausted into fingers 38, which direct the heated air into the oven chamber 16 and onto the food product travelling on the conveyor 22 for convection cooking. Heated air within the oven chamber 16 recirculates through the openings 76, 126 into the heat exchange chamber 32, where the recirculated air is heated via heat transfer with the surfaces of the coiled air passages 46. This reheated air is then drawn from the heat exchange chamber 32 into the inlets 114 of the fans 56, 58, where it mixes with the heated air from the suction box 54 and is directed once again into the oven chamber 16 via the fans 56, 58 and impingement fingers 38.

As the heated air can take multiple different paths from the inlet 62 of the burner box 34 to the outlets 112 of the suction box 54, multiple heated airflow paths are defined in the burner assembly 14. For example, a first heated airflow path extends through the heat source 42, where the ambient air exhausted from the inlets 62 is heated, to the first coiled air passage 46A, into the first chamber 104 of the suction box 54, through the aperture 108 into the second chamber 106 of the suction box, and to one/both of the fans 56, 58. One or more other (e.g., second, third, fourth) heated airflow paths also extend through the heat source 42. For example, ambient air exhausted from the inlets 62 and heated by heat source 42 can travel along a different, second airflow path through the coiled air passage 46B, into the first chamber 104 of the suction box 54, converging with the first airflow path through the aperture 108 and into the second chamber 106 of the suction box, and to one/both of the fans 56, 58.

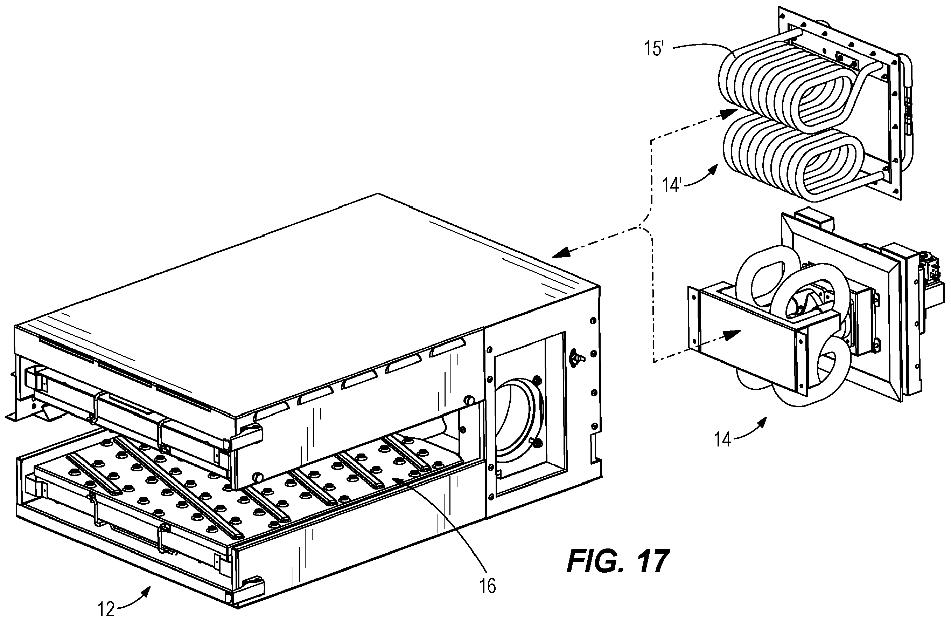

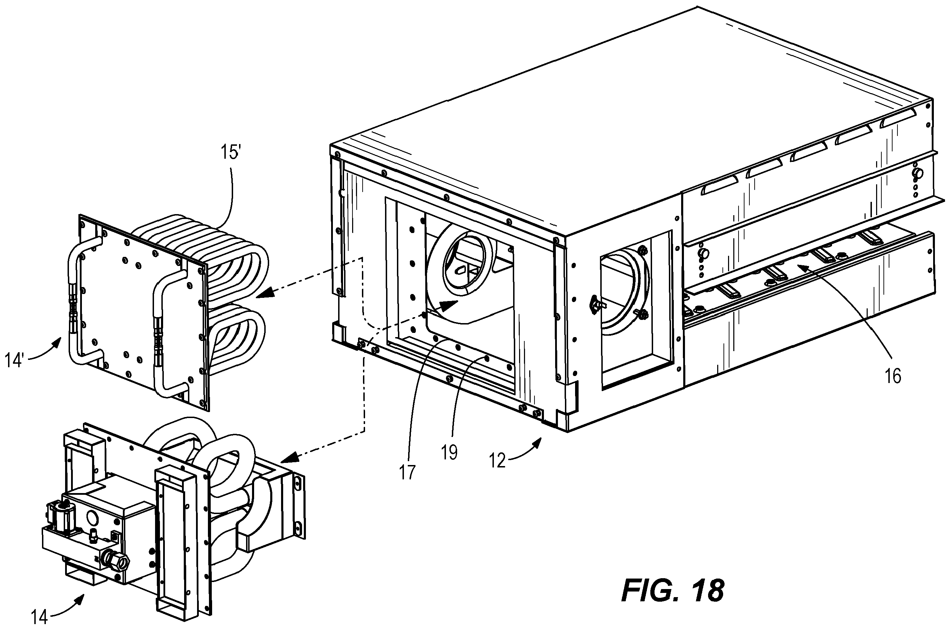

In some embodiments, the gas heating assembly (or burner assembly) 14 is removable from the housing 12 for maintenance or replacement of one or more of the components of the burner assembly 14. With the burner assembly 14 located rearward of the oven chamber 16 when assembled within the housing 12, the burner assembly 14 is removable rearwardly through the housing 12, as shown in Figs. 17-18 (the auxiliary housing 36 is omitted from the burner assembly 14 in Figs. 17-18 for clarity). In some embodiments, the same housing 12 having the same oven chamber 16 may be configured to separately receive different heating assemblies 14, 14'. As shown, the heating assembly 14 is a gas burner assembly and the heating assembly 14' is an electric heating assembly 14' of a substantially different design. Dissimilar to the gas heating assembly 14, the electric heating assembly 14' includes electric heating elements 15' (e.g., one or more tubular elements having a resistance heating alloy wire therein) and related wiring. As shown in Fig. 18, the housing 12 has an opening 17 sized to receive at least a portion of each of the heating assemblies 14, 14' and a common mounting interface 19 (e.g., a plurality of apertures) for separately aligning and coupling the heating assemblies 14, 14' to the same point on the housing 12.

In some embodiments, the heating assembly 14 is a retrofit kit configured to replace an electric heating assembly 14' in existing conveyor ovens. To convert an existing electric conveyor oven into the gas conveyor oven 10 (Fig. 1), a user removes the electric heating assembly 14' including the electric heating elements 15' and any associated wiring by removing the electric heating assembly 14' from the mounting interface 19 on the rear of the housing 12. In some embodiments, removing the electric heating assembly 14' includes removing fasteners (e.g., threaded fasteners) and removing at least a portion of the electric heating assembly 14' through the opening 17 in the rear of the housing 12. In some embodiments, the electric heating assembly 14' is removable as a single component. In other embodiments, the electric heating assembly 14' may be removable in multiple stages. With the electric heating assembly 14' removed, the housing 12 is arranged to receive the gas heating assembly 14. At least a portion of the gas heating assembly 14 is inserted through the opening 17 in the housing 12 such that the assembly 14 engages the mounting interface 19. In some embodiments, the gas heating assembly 14 is insertable as a single component. In other embodiments, the gas heating assembly 14 is insertable in multiple stages (e.g., the suction box 54 being fastened to the rear wall 78 prior to coupling the coiled air passages 46 and/or burner box 34 thereto). In some embodiments, coupling the gas heating assembly 14 to the housing 12 includes fastening (e.g., with threaded fasteners) the gas heating assembly 14 to the housing 12.

Each of the heating assemblies 14, 14' operate with some of the same components, which are not removed or replaced when installing or retrofitting the heating assembly 14, 14'. For example, the fans 56, 58 (Figs. 4A-5) remain within the housing 12 and are used by either heating assembly 14, 14'. Similarly, the rear wall 78, the impingement fingers 38 and the oven chamber 16 (Fig. 3) are common to either heating assembly 14, 14'. The control system (similar to control assembly 30 in Figs. 1-2) of the oven 10 may be replaced or reconfigured to operate with the gas heating assembly 14 when replacing the electric heating assembly 14'. In some embodiments, the control assembly may be programmed to separately control both heating assemblies 14, 14'. As referenced herein, U.S. Patent No. 10,842,156, assigned to The Middleby Corporation, Elgin, I1, relates to exemplary oven control systems for gas and electric heating assemblies, the entire contents of which are incorporated herein by reference.

The foregoing detailed description of the certain exemplary embodiments has been provided for the purpose of explaining the principles of the application and examples of practical implementation, thereby enabling others skilled in the art to understand the disclosure for various embodiments and with various modifications as are suited to the particular use contemplated. This description is not necessarily intended to be exhaustive or to limit the application to the exemplary embodiments disclosed. Any of the embodiments and/or elements disclosed herein may be combined with one another to form various additional embodiments not specifically disclosed. Accordingly, additional embodiments are possible and are intended to be encompassed within this specification and the scope of the appended claims. The specification describes specific examples to accomplish a more general goal that may be accomplished in another way.

There now follows a series of clauses, not claims, setting out aspects of the invention:
Clause 1. A conveyor oven for cooking food, the conveyor oven comprising:
   an oven chamber in which the food is cooked;
   a conveyor moveable to convey the food within the oven chamber;
   a burner assembly operable to heat air for convection cooking of the food moving within the oven chamber on the conveyor, the burner assembly including a heat source, a coiled air passage, and a suction box, the coiled air passage providing a circuitous heated air passage between the heat source and the suction box; and
   a fan configured to draw heated air from the suction box and exhaust the heated air into the oven chamber for convection cooking of the food moving through the oven chamber on the conveyor.
Clause 2. The conveyor oven of clause 1, wherein the heat source includes a burner box having a gas burner mounted therein.
Clause 3. The conveyor oven of clause 2, wherein the burner box is coupled to the coiled air passage via a coupler, wherein the coiled air passage is a first coiled air passage, the conveyor oven further comprising a second coiled air passage, and wherein the coupler includes an inlet for receiving heated air from the burner box, a first outlet coupling the burner box to the first coiled air passage, and a second outlet coupling the burner box to the second coiled air passage.
Clause 4. The conveyor oven of clause 3, wherein each of the first coiled air passage and the second coiled air passage includes an inlet at the coupler and an outlet at the suction box, wherein the first coiled air passage is coiled at least one full rotation between the inlet of the first coiled air passage and the outlet of the first coiled air passage, and wherein the second coiled air passage is coiled at least one full rotation between the inlet of the second coiled air passage and the outlet of the second coiled air passage.
Clause 5. The conveyor oven of clause 4, wherein the first coiled air passage is coiled in a clockwise direction and the second coiled air passage is coiled in a counterclockwise direction, opposite the clockwise direction.
Clause 6. The conveyor oven of clause 1, wherein the coiled air passage includes an inlet at the coupler and an outlet at the suction box, wherein the first coiled air passage is coiled at least one full rotation between the inlet of the first coiled air passage and the outlet of the first coiled air passage.
Clause 7. The conveyor oven of clause 6, wherein the coiled air passage coils about a central axis, wherein the central axis is parallel to the direction in which the food on the conveyor moves within the oven chamber.
Clause 8. The conveyor oven of clause 1, wherein the conveyor is movable along a longitudinal axis, wherein the suction box includes a first chamber, a second chamber coupled to the first chamber via an aperture, an inlet coupled to the coiled air passage, and an outlet positioned at an inlet of the fan, wherein the aperture is offset from the inlet of the suction box and the outlet of the suction box along the longitudinal axis.
Clause 9. The conveyor oven of clause 1, wherein the coiled air passage is a heat exchanger configured to facilitate heat transfer with air within a heat exchange chamber at least partially housing the burner assembly.
Clause 10. The conveyor oven of clause 9, wherein the coiled air passage is configured to facilitate heat transfer with air drawn from the oven chamber.
Clause 11. A conveyor oven for cooking food, the conveyor oven comprising:
   an oven chamber in which the food is cooked;
   a conveyor moveable to convey the food within the oven chamber;
   a burner assembly operable to heat air for convection cooking of the food moving within the oven chamber on the conveyor, the burner assembly including a gas burner mounted within a burner box, a first coiled air passage, a second coiled air passage separate from the first coiled air passage, and a suction box, each of the first and second coiled air passages providing a circuitous heated air passage between the heat source and the suction box; and
   a first fan and a second fan, each of the first and second fans configured to draw heated air from the suction box and exhaust the heated air into the oven chamber for convection cooking of the food moving through the oven chamber on the conveyor,
   wherein the first fan is configured to deliver heated air to the oven chamber above the conveyor, and
   wherein the second fan is configured to deliver heated air to the oven chamber below the conveyor.
Clause 12. The conveyor oven of clause 11, wherein the suction box mixes heated air from the first coiled air passage with heated air from the second coiled air passage in a common passage.
Clause 13. The conveyor oven of clause 12, wherein each of the first fan and the second fan draws heated air from the common passage.
Clause 14. The conveyor oven of clause 11, wherein the burner box is coupled to the first coiled air passage and the second coiled air passage via a coupler, and wherein the coupler includes an inlet for receiving heated air from the burner box, a first outlet coupling the burner box to the first coiled air passage, a second outlet coupling the burner box to the second coiled air passage, and a diverter positioned between the first and second outlets to direct heated air from the inlet towards the first and second outlets.
Clause 15. The conveyor oven of clause 11, wherein each of the first coiled air passage and the second coiled air passage includes an inlet at a first end and an outlet at a second end, opposite the first end, wherein the first coiled air passage is coiled at least one full rotation between the inlet of the first coiled air passage and the outlet of the first coiled air passage, and wherein the second coiled air passage is coiled at least one full rotation between the inlet of the second coiled air passage and the outlet of the second coiled air passage.
Clause 16. The conveyor oven of clause 15, wherein the first coiled air passage is coiled in a clockwise direction and the second coiled air passage is coiled in a counterclockwise direction, opposite the clockwise direction.
Clause 17. The conveyor oven of clause 11, further comprising an air return configured to provide air from the oven chamber to an inlet of the first fan and an inlet of the second fan, wherein the first and second coiled air passages function as heat exchangers and are configured to facilitate heat transfer with the air from the oven chamber.
Clause 18. A conveyor oven for cooking food, the conveyor oven comprising:
   an oven chamber in which the food is cooked;
   a conveyor moveable to convey the food within the oven chamber;
   a burner assembly operable to heat air for convection cooking of the food moving within the oven chamber on the conveyor, the burner assembly including a gas burner mounted within a burner box, a first coiled air passage, a second coiled air passage separate from the first coiled air passage, and a suction box, each of the first and second coiled air passages providing a circuitous heated air passage between the heat source and the suction box; and
   a fan configured to draw heated air from the suction box and exhaust the heated air into the oven chamber for convection cooking of the food moving through the oven chamber on the conveyor,
   wherein a first heated airflow path is defined from the burner box, through the first coiled air passage, through the suction box, through the fan, and into the oven chamber,
   wherein a second heated airflow path is defined from the burner box, through the second coiled air passage, through the suction box, through the fan, and into the oven chamber, and
   wherein the first and second heated airflow paths converge and intermix at the suction box.
Clause 19. The conveyor oven of clause 18, the burner assembly further comprising a coupler configured to couple the first coiled air passage to the burner box and configured to couple the second coiled air passage to the burner box, wherein the coupler is common to both the first heated airflow path and the second heated airflow path.
Clause 20. The conveyor oven of clause 18, wherein the fan is a first fan configured to deliver heated air to the oven chamber at a location above the conveyor, the conveyor oven further comprising a second fan configured to deliver heated air from the suction box to the oven chamber at a location below the conveyor, wherein each of the first and second heated airflow paths diverges at the suction box to pass through the first fan and the second fan.

## Claims

1. A conveyor oven for cooking food, the conveyor oven comprising:
an oven chamber in which the food is cooked;
a conveyor moveable to convey the food within the oven chamber;
a burner assembly operable to heat air for convection cooking of the food moving within the oven chamber on the conveyor, the burner assembly including a heat source, a coiled air passage, and a suction box, the coiled air passage providing a circuitous heated air passage between the heat source and the suction box; and
a fan configured to draw heated air from the suction box and exhaust the heated air into the oven chamber for convection cooking of the food moving through the oven chamber on the conveyor.

2. The conveyor oven of claim 1, wherein the heat source includes a burner box having a gas burner mounted therein.

3. The conveyor oven of claim 1 or 2, wherein the coiled air passage is coiled at least one full rotation between the inlet of the heat source and the suction box.

4. The conveyor oven of any one of the preceding claims, further comprising an air return configured to provide air from the oven chamber to an inlet of the fan, wherein the coiled air passage is configured to function as a heat exchanger and heat the air returned from the oven chamber, and wherein the fan is configured to exhaust into the oven chamber air from the suction box and heated air returned from the oven chamber.

5. The conveyor oven of any of the preceding claims, wherein the coiled air passage is a first coiled air passage and the fan is a first fan, the conveyor oven further comprising a second coiled air passage providing a circuitous heated air passage between the heat source and the suction box and a second fan configured to draw heated air from the suction box and exhaust the heated air into the oven chamber for convection cooking of the food moving through the oven chamber on the conveyor, and wherein the second coiled air passage is coiled at least one full rotation between the heat source and the suction box and is configured to function as a heat exchanger and heat the air returned from the oven chamber.

6. The conveyor oven of claim 5, wherein the first coiled air passage is coiled in a clockwise direction in an airflow path from the heat source to the suction box and the second coiled air passage is coiled in a counterclockwise direction, opposite the clockwise direction, in an airflow path from the heat source to the suction box.

7. The conveyor oven of claim 5 or 6, wherein each of the first and second coiled air passages coils about a central axis, wherein the central axis is parallel to a direction in which food on the conveyor moves within the oven chamber.

8. The conveyor oven of any one of claims 5-7, wherein the suction box includes a first chamber, a second chamber in fluid communication with the first chamber via an aperture, a first inlet coupled to the first coiled air passage and a second inlet coupled to the second coiled air passage, a first outlet positioned at an inlet of the first fan and a second outlet positioned at an inlet of the second fan, and wherein the aperture is offset from each of the first and second inlets and from each of the first and second outlets of the suction box along a longitudinal axis of the suction box.

9. The conveyor oven of any one of claims 5-8, wherein the suction box mixes heated air from the first coiled air passage with heated air from the second coiled air passage in a common passage.

10. The conveyor oven of claim 9, wherein each of the first fan and the second fan draws heated air from the common passage.

11. The conveyor oven of any one of claims 5-10, wherein the first fan is configured to deliver heated air to the oven chamber at a location above the conveyor and the second fan is configured to deliver heated air to the oven chamber at a location below the conveyor.

12. The conveyor oven of any one of claims 5-11, wherein the burner box is coupled to the first coiled air passage and the second coiled air passage via a coupler, and wherein the coupler includes an inlet for receiving heated air from the burner box, a first outlet coupling the burner box to the first coiled air passage, a second outlet coupling the burner box to the second coiled air passage, and a diverter positioned between the first and second outlets to direct heated air from the inlet towards the first and second outlets.

13. The conveyor oven of any one of claims 5-12, further comprising a baffle plate configured to direct airflow from the oven chamber away from the inlets of the first and second fans and toward the first and second coiled air passages.

14. The conveyor oven of any one of claims 5-13, further comprising a diverter positioned to extend at least partially around one of the first or second coiled air passages to direct airflow from the oven chamber to the first or second coiled air passages.

15. The conveyor oven of claim 14, further comprising a third coiled air passage providing a circuitous heated air passage between the heat source and the suction box, wherein the first and third coiled air passages are upper coiled air passages, and wherein the diverter is M-shaped such that the diverter is configured to at least partially extend around the tops of each of the first and third coiled air passages.
